# EUROPÄISCHE PATENTSCHRIFT

(11) **EP 2 696 092 B1**
(45) Veröffentlichungstag und Bekanntmachung des Hinweises auf die Patenterteilung: **27.11.2019**
(21) Anmeldenummer: 13177682.5
(22) Anmeldetag: 23.07.2013
(51) Int. Cl.: F16D 65/18, F16C 19/46, F16D 55/226, F16D 121/08, F16D 125/28

(54) **Scheibenbremse für ein Nutzfahrzeug sowie Verfahren zu deren Herstellung**
Disc brake for a commercial vehicle and method for its manufacture
Frein à disque pour un véhicule utilitaire ainsi que son procédé de fabrication

(30) Priorität: 07.08.2012 DE 102012107233
(43) Veröffentlichungstag der Anmeldung: 12.02.2014
(73) Patentinhaber: KNORR-BREMSE Systeme für Nutzfahrzeuge GmbH, 80809 München (DE)
(72) Erfinder: Löw, Alfred, 94094 Rotthalmünster (DE)

(56) Entgegenhaltungen:
- EP-A1- 2 175 156
- EP-A2- 1 233 202
- WO-A1-2006/058581
- WO-A1-2006/058784
- DE-B3-102005 056 065

## Beschreibung

Die Erfindung betrifft eine Scheibenbremse für ein Nutzfahrzeug nach dem Oberbegriff des Anspruchs 1 sowie ein Verfahren zu deren Herstellung.

Aus der WO 2004/074705 A1 ist eine gattungsgemäße Scheibenbremse bekannt, bei der die Zuspannung im Fall einer Bremsung mittels eines Bremshebels erfolgt, der pneumatisch oder elektromechanisch betätigbar ist.

Dabei dient der Bremshebel zur Erzielung einer ausreichenden Bremskraft als mechanische Übersetzung, wozu der Bremshebel an einem Ende als Exzenter ausgebildet ist, der sich an Lagersitzen des Bremssattels gleitend abstützt.

Andererseits liegt der Bremshebel an einer in Richtung einer Bremsscheibe bewegbaren Brücke an, in der Stellspindeln angeordnet sind, mittels der ein zugeordneter Bremsbelag gegen die Bremsscheibe pressbar ist.

Bei einer Betätigung des Bremshebels, d.h. bei dessen Verschwenken, gleitet der Exzenter entlang der als kreisbogenförmige Bahn ausgebildeten Lagersitze, wobei die Brücke in Richtung der Bremsscheibe verschoben wird.

Zwischen dem Exzenter und den Lagersitzen sind zur Minimierung der Reibung Wälzlagerungen vorgesehen, deren Wälzkörper üblicherweise als Nadeln, Zylinderrollen oder Kugeln ausgebildet sind.

Jedes Wälzlager als Wälzlagersegment besteht aus den genannten Wälzkörpern, die in einem Lagerkäfig gehalten sind, sowie einer die konvexe Außenseite überdeckenden Lagerschale, mit der das jeweilige Wälzlager im Lagersitz einliegt.

Die Lagersitze des Bremssattels werden mechanisch bearbeitet, um eine exakte Form und Lage sowie Maßhaltigkeit für die Aufnahme der Wälzlager zu gewährleisten, die mit dem Bremssattel durch Verklipsen verbunden sind. Hierzu sind im Bremssattel entsprechende, auch bearbeitete Ausnehmungen vorgesehen.

Die aus Blech bestehende jeweilige Lagerschale wird durch Stanzen und Biegen hergestellt und anschließend zur Beseitigung von beim Umformen entstehenden Spannungen wärmebehandelt.

Allerdings wird dadurch die Maßhaltigkeit der Lagerschale stark beeinflusst, was eine gewisse Ausschussquote zur Folge hat.

Diese Maßhaltigkeit betrifft auch ein sogenanntes Spreizmaß, d.h. die Sehnenlänge der kreisbogenförmig geformten Lagerschale. Dieses Spreizmaß unterliegt aufgrund der Wärmebehandlung relativ großer, nicht beeinflussbarer Schwankungen, die Störungen im Montageablauf verursachen.

Das bekannte Wälzlager steht damit einer Kostenoptimierung bei der Herstellung der Scheibenbremse in erheblichem Umfang entgegen.

In der DE 10 2005 056065 B3 ist eine Scheibenbremse offenbart, bei der das Wälzlager sich mittels einer separaten Lagerschale am Exzenter des Bremshebels abstützt.

Zur Abstützung des Bremshebels am Bremssattel ist in der EP 1 233 202 A2 ein am Bremssattelrücken sich abstützender Lagerbock vorgesehen.

Ein aus der EP 2 175 156 A1 bekannter Bremshebel stützt sich mittels kugelförmiger Lagerelemente in Lageraufnahmen des Bremssattels ab, während die WO 2006/058581 A1 eine Scheibenbremse offenbart, bei der der Lagersitz des Bremssattels mit einer Lagerschale ausgekleidet ist, an der das Wälzlager anliegt. Eine mit der aus der WO 2004/074 705 A1 vergleichbare Lagerung ist aus der WO 2006/058784 A1 bekannt.

Der Erfindung liegt die Aufgabe zugrunde, eine Scheibenbremse der gattungsgemäßen Art sowie ein Verfahren zu deren Herstellung so weiterzuentwickeln, dass eine einfachere und kostengünstigere Fertigung möglich ist.

Diese Aufgabe wird durch eine Scheibenbremse mit den Merkmalen des Anspruchs 1 sowie ein Verfahren mit den Merkmalen des Anspruchs 6 gelöst.

Während im Stand der Technik die Lauffläche für die Wälzkörper durch die Lagerschale gebildet wird, besteht diese Lauffläche gemäß der Erfindung unmittelbar aus dem Lagersitz, der, wie bisher, mechanisch, d.h. spangebend bearbeitet wird, jedoch anschließend gehärtet wird, um zu verhindern, dass sich die Wälzkörper in den Bremssattel eingraben.

Gemäß dem neuen Verfahren erfolgt die Härtung des Lagersitzes durch Laserhärten, was erhebliche Vorteile bietet.

Hierzu ist die relativ kurze Prozesszeit zu nennen, bei einer hohen erzielbaren Härte, ebenso wie der mögliche Verzicht auf eine Nachbehandlung, beispielsweise Waschen oder Anlassen.

Da die Wälzkörper nun unmittelbar am Lagersitz des Bremssattels anliegen, kann auf den Einsatz einer Lagerschale verzichtet werden.

Naturgemäß führt dies zu einer Kostenersparnis, die sich sowohl aus dem Material- wie auch aus dem Bearbeitungsverzicht einer solchen Lagerschale ergibt.

Daneben entfällt auch die genannte Ausschussquote aufgrund nicht eingehaltener Toleranzen, wodurch sich ebenso Kostenvorteile ergeben wie aus einer vereinfachten Montage, da das genannte Spreizmaß, das durch die Lagerschale beeinflusst wird, im Wesentlichen gleich bleibt.

Auch die spanende Bearbeitung des Bremssattels ist nunmehr wesentlich vereinfacht, da auf das Einbringen von Ausnehmungen zum Einklipsen der Wälzlagerung verzichtet werden kann.

Im Übrigen musste bislang, um die Lagerschale seitlich zu fixieren, an dem Lagerkäfig beidseitig, d.h., in den konvexen Randbereichen, jeweils ein Bündchen angeformt sein. Auf solche Bündchen kann nunmehr ebenfalls verzichtet werden, wodurch sich eine Materialeinsparung bei der Herstellung des Lagerkäfigs ergibt.

Durch das erfindungsgemäß eingesetzte Laserhärten wird eine Härtung der Randschichten erreicht, wobei der Energieeintrag mittels Strahlung direkt auf den Bau in den Lagersitz erfolgt.

Hierbei wird lokal begrenzt die obere Schicht des Werkstoffs bis zu einer Temperatur von vorzugsweise 900 °C - 1400 °C erwärmt, bei einer Haltezeit von 3 - 10 Sekunden, in der sich ein Austenitgefüge des Materials bildet, wobei der Bremssattel bevorzugt aus Gusseisen besteht, beispielsweise GGG70.

Diese Härtung führt zu einer Homogenisierung der Kohlenstoffverteilung und damit zu einer Ausbreitung des Austenits im Material.

Durch den relativ geringen Wärmeeintrag sowie eine schnelle Wärmeableitung erfolgt eine Selbstabschreckung, ohne dass zur Abschreckung zusätzliche Medien, wie Wasser, Öl oder Luft eingesetzt werden müssten, so dass die Laserhärtung für die Härtung des Lagersitzes insofern prädestiniert ist, als sich aus einer anderen Art der Härtung Nachteile ergeben könnten.

Weitere vorteilhafte Ausbildungen der Erfindung sind in den Unteransprüchen gekennzeichnet.

Ein Ausführungsbeispiel wird nachfolgend anhand der beigefügten Zeichnungen beschrieben.

Es zeigen:
- Figur 1: die schematische Darstellung des Aufbaus einer erfindungsgemäßen Scheibenbremse in einem Querschnitt
- Figur 2: ein Wälzlager der Scheibenbremse in einer Seitenansicht
- Figur 3: das Wälzlager in einer Vorderansicht.

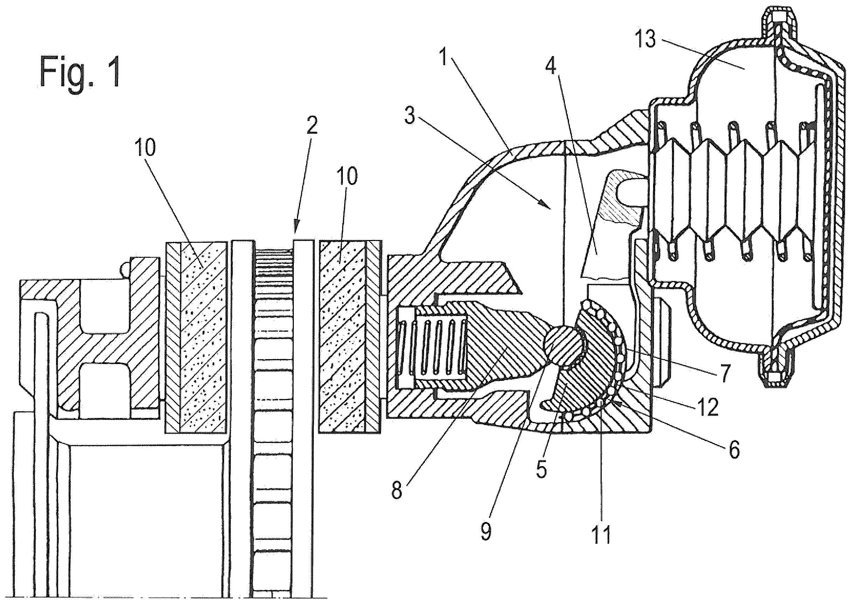

In der Figur 1 ist eine Scheibenbremse für ein Nutzfahrzeug in einem Halbschnitt dargestellt erkennbar, die eine an einer nicht gezeigten Achse des Nutzfahrzeuges befestigte und von einem Bremssattel 1 umfasste Bremsscheibe 2 aufweist, wobei der Bremssattel 1 in Richtung der Bremsscheibe 2 verschiebbar ist.

Im Bremssattel 1 ist eine Zuspanneinrichtung 3 angeordnet, mit der bei einer über einen vorzugsweise pneumatisch betätigten Bremszylinder 13 ausgelösten Bremsung Bremsbeläge 10 an die Bremsscheibe 2 drückbar sind.

Hierzu greift die Zuspanneinrichtung 3 über eine Wälzrolle 9 an einer Brücke 8 an, in der zwei nicht dargestellte, parallel und mit Abstand zueinander angeordnete Stellspindeln gelagert sind.

Die Zuspanneinrichtung 3 weist einen Bremshebel 4 auf, der mit dem Bremszylinder 13 in Wirkverbindung steht und der andererseits als Exzenter 5 ausgebildet ist zur Abstützung an der Rückwand des Bremssattels 1.

Um ein leichtes Verschwenken des Bremshebels 4 gegenüber dem Bremssattel 1 zu erreichen, sind zwischen dem Exzenter 5 und konkav ausgeformten Lagersitzen 7 des Bremssattels 1 Wälzlager 6 angeordnet, wobei der Exzenter 5 im Querschnitt als Kreisabschnitt ausgebildet ist, an dessen Außenfläche die Wälzlager 6 anliegen.

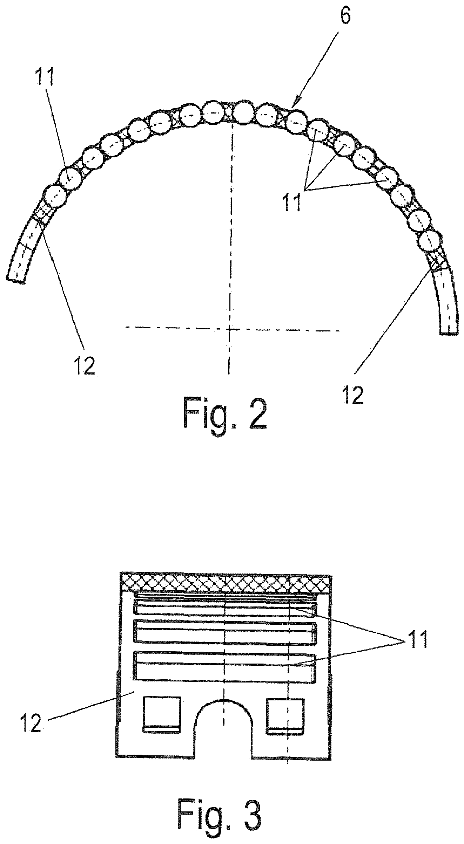

In den Figuren 2 und 3 ist ein solches Wälzlager 6 jeweils als Einzelheit dargestellt. Dabei zeigt die Figur 2 eine geschnittene Seitenansicht und die Figur 3 eine geschnittene Vorderansicht des Wälzlagers 6. Es ist zu erkennen, dass das Wälzlager 6 aus Wälzkörpern 11, im Beispiel als Nadeln ausgebildet, und einem Lagerkäfig 12 besteht, in dem die Wälzkörper 11 gehalten sind. Bevorzugt ist der Lagerkäfig 12 aus Kunststoff hergestellt.

Erfindungsgemäß ist der Lagersitz 7 gehärtet, vorzugsweise durch Laserhärtung, und die Wälzkörper 11 stützen sich unmittelbar am Lagersitz 7 ab. Die Grundflächenabmaße des Lagersitzes 7 entsprechen dabei den zugeordneten Abmaßen der von den Wälzkörpern 12 genutzten Fläche.

Wie besonders deutlich in der Figur 3 zu erkennen ist, nimmt der Querschnitt des Lagerkäfigs 12 eine rechteckige Form ein, d.h., auf randseitige, nach außen gerichtete Bündchen, wie bei einem Lagerkäfig nach dem Stand der Technik, kann hier verzichtet werden, da die Wälzkörper 11 direkt am Lagersitz 7 anliegen.

## Patentansprüche

1. Scheibenbremse für ein Nutzfahrzeug, mit mindestens einer, in einem Bremssattel (1) angeordneten Zuspanneinrichtung (3), mit der bei einer Bremsung ein Bremsbelag (10) an eine Bremsscheibe (2) drückbar ist und die einen schwenkbaren, an einem Ende als Exzenter (5) ausgebildeten Bremshebel (4) aufweist, wobei sich der Exzenter (5) mittels mindestens eines, in einem Lagerkäfig (12) gehaltene Wälzkörper (11) aufweisenden Wälzlagers (6) an einem Lagersitz (7) des Bremssattels (1) als Widerlager abstützt, **dadurch gekennzeichnet, dass** die Wälzkörper (11) unmittelbar am spanend bearbeiteten und gehärteten Lagersitz (7) und das Wälzlager (6) an der Außenfläche des im Querschnitt als Kreisabschnitt ausgebildeten Exzenters anliegen.

2. Scheibenbremse nach Anspruch 1, **dadurch gekennzeichnet, dass** die Grundflächenabmaße des Lagersitzes (7) den zugeordneten Abmaßen der von den Wälzkörpern (11) genutzten Fläche entsprechen.

3. Scheibenbremse nach Anspruch 1 oder 2, **dadurch gekennzeichnet, dass** der Lagersitz (7) in einer oberen Schicht des Bremssattels (1) gehärtet ist.

4. Scheibenbremse nach einem der vorhergehenden Ansprüche, **dadurch gekennzeichnet, dass** der Lagerkäfig (12) einen rechteckigen Querschnitt aufweist.

5. Scheibenbremse nach einem der vorhergehenden Ansprüche, **dadurch gekennzeichnet, dass** die Wälzkörper (11) als Nadeln, Rollen oder Kugeln ausgebildet sind.

6. Verfahren zur Herstellung des aus Gusseisen bestehenden Bremssattels (1) einer Scheibenbremse für ein Nutzfahrzeug, wobei ein Bremssattelrücken mindestens einen Lagersitz (7) zur Abstützung eines Wälzlagers (6) aufweist, der mechanisch, insbesondere spanend bearbeitet wird, **dadurch gekennzeichnet, dass** der Lagersitz (7) nach der mechanischen Bearbeitung lasergehärtet wird.

7. Verfahren nach Anspruch 6 , **dadurch gekennzeichnet, dass** zur Härtung der Lagersitz (7) auf 900°C - 1400°C bei einer Haltezeit von etwa 3 bis 10 Sekunden durchgeführt wird.

## Claims

1. Disc brake for a commercial vehicle, having at least one application device (3), which is located in a brake calliper (1) and by which a brake pad (10) can be pressed against a brake disc (2) at a braking operation and which has a pivotable braking lever (4) designed as a cam (5) at one end, wherein the cam (5) is supported as an abutment at a bearing seat (7) of the brake calliper (1) by means of at least one antifriction bearing (6) having rolling bodies (11) held in a cage (12), **characterised in that** the rolling bodies (11) bear directly against the machined and hardened bearing seat (7) and the antifriction bearing (6) bears against the outer surface of the cam, which is designed as a circular segment in cross-section.

2. Disc brake according to claim 1, **characterised in that** the base dimensions of the bearing seat (7) correspond to the corresponding dimensions of the area used by the rolling bodies (11).

3. Disc brake according to claim 1 or 2, **characterised in that** the bearing seat (7) is hardened in an upper layer of the brake calliper (1).

4. Disc brake according to any of the preceding claims, **characterised in that** the bearing cage (12) has a rectangular cross-section.

5. Disc brake according to any of the preceding claims, **characterised in that** the rolling bodies (11) are designed as needles, rollers or balls.

6. Method for producing the cast iron brake calliper (1) of a disc brake for commercial vehicles, wherein a brake calliper back has at least one bearing seat (7) for supporting an antifriction bearing (6), the bearing seat (7) being mechanically treated, in particular machined, **characterised in that** the bearing seat (7) is laser-hardened after the mechanical treatment.

7. Method according to claim 6, **characterised in that** the hardening of the bearing seat (7) is performed at 600°C - 1400°C with a dwell time of approximately 3 to 10 seconds.

## Revendications

1. Frein à disque d'un véhicule utilitaire, comprenant au moins un dispositif (3) de serrage, qui est monté dans un étrier (1) de frein, par lequel, lors d'un freinage, une garniture (10) de frein peut être poussée sur un disque (2) de frein et qui a un levier (4) de frein pivotant et constitué à une extrémité en excentrique (5), l'excentrique (5) s'appuyant, au moyen d'un palier (6) à roulement ayant des organes (11) de roulement retenus dans une cage (12) de roulement, sur un siège (7) de palier de l'étrier (1) de frein comme butée, caractérisé en que les organes (11) de roulement s'appliquent directement au siège (7) de palier usiné avec enlèvement de copeaux et trempé, et en ce que le palier (6) à roulement s'applique à la surface extérieure de l'excentrique constitué, en section transversale, sous la forme d'un segment de cercle.

2. Frein à disque suivant la revendication 1, **caractérisé en ce que** les dimensions de surface de base du siège (7) du palier correspondent aux dimensions associées de la surface utilisée par les organes (11) de roulement.

3. Frein à disque suivant la revendication 1 ou 2, **caractérisé en ce que** le siège (7) du palier est trempé dans une couche supérieure de l'étrier (1) de frein.

4. Frein à disque suivant l'une des revendications précédentes, **caractérisé en ce que** la cage (12) du palier a une section transversale rectangulaire.

5. Frein à disque suivant l'une des revendications précédentes, **caractérisé en ce que** les organes (11) de roulement sont constitués sous la forme d'aiguilles, de rouleaux ou de billes.

6. Procédé de fabrication de l'étrier (1) de frein en fonte d'un frein à disque d'un véhicule utilitaire, dans lequel un dos de l'étrier de frein a au moins un siège (7) de palier pour l'appui d'un palier (6) à roulement, qui est usiné mécaniquement, notamment avec enlèvement de copeaux, **caractérisé en ce que** le siège (7) de palier est trempé au laser après l'usinage mécanique.

7. Procédé suivant la revendication 6, **caractérisé en ce que**, pour la trempe, l'on porte le siège (7) de palier de 900°C à 1400°C avec un temps de maintien d'environ 3 à 10 secondes.
